# EUROPEAN PATENT APPLICATION

(11) **EP 1 819 141 A1**
(43) Date of publication of application: **15.08.2007**
(21) Application number: 07100914.6
(22) Date of filing: 22.01.2007
(51) Int. Cl.: H04N 1/00, H04N 1/32

(54) **Multimedia content production method for portable device**

(30) Priority: 14.02.2006 KR 20060014127
(71) Applicant: Samsung Electronics Co., Ltd., Suwon-si, Gyeonggi-Do (KR)
(72) Inventor: Kim, Tae Kyung, Yangju-si Gyeonggi-do (KR); Shin, Seung Woo, Gwanak-gu Seoul (KR); Hwang, Jae Joon, Seoul (KR); Hwang, Byeong Cheol 902, Brownstone Yeoksam Apt., Seoul (KR)
(74) Representative: Grünecker, Kinkeldey, Stockmair & Schwanhäusser Anwaltssozietät

(57) **Abstract**

A multimedia content production method using a portable device. The multimedia content production method according to the present invention retrieves at least one picture file from a storage, produces at least one sound file corresponding to a retrieved picture file, creates a combination file by combining the picture and sound files, and integrates at least one combination file into a multimedia file. Since the multimedia content production method according to the present invention may create a multimedia file by combining a plurality of picture and sound files belonging to an identical theme and arranging the multimedia files in a sequential order, it is possible to improve the utilization of the portable device equipped with a camera (for capturing pictures) and obtaining an information transfer efficiency comparable to that of a motion picture transfer efficiency using a minimal amount of data.

## Description

### BACKGROUND OF THE INVENTION

### 1. Field of the Invention

The present invention relates to a portable device of a mobile communication system and, in particular, to a multimedia content production method using a portable device.

### 2. Description of the Related Art

Portable devices such as cellular phones equipped with digital cameras have gained widespread acceptance. Typically, portable terminals provide means for a user to take motion and/or still pictures and to use these pictures as background images on a display screen. Moreover, conventional portable terminals provide means for a user to transmit pictures to other devices. Further, some typical portable terminals can reproduce pictures on a display and play a corresponding voice message so as to enable a user to recall a message recorded when the picture was taken.

For example, in a conventional portable phone equipped with camera and voice recorder, a picture taken by the camera, and a voice message recorded by the voice recorder, are first stored, and then the picture and voice message are reproduced when a playback command is input.

In addition, in the conventional portable phone with camera and voice recorder, the picture and voice message can be selectively stored and replayed, such that the user can decide whether to attach the voice message to the picture, and whether to replay the picture together with the attached voice message.

However, the conventional portable phone is limited to providing additional information on the currently displayed individual pictures such that it is impossible to present the relationships of the pictures sequentially taken on the same background or associate the pictures using an identical theme.

For example, a typical portable phone equipped with a camera may have a slide show function, which displays the stored pictures in a predetermined time interval. However, the slide show function of the conventional portable phone equipped with the camera has the drawback in that the pictures stored in the portable phone can be displayed just in a predetermined sequential order. In other words, it is impossible to adjust the display order of the pictures. Also, the slide show function provided by the conventional portable phone cannot provide voice narrations related to the corresponding pictures.

Furthermore, the conventional portable phone supporting the slide show function lacks an editing function for editing and storing the pictures and the voice messages.

### SUMMARY OF THE INVENTION

The present invention has been made in an effort to solve the above problems, and it is an object of the present invention to provide a multimedia content production method for a portable device that is capable of integrating a plurality of pictures and voice messages associated with the respective pictures into a single theme.

It is another object of the present invention to provide a multimedia content production method for a portable device that is capable of improving the utilization of the portable device equipped with camera and of obtaining information transfer efficiency that is similar to the efficiency of a motion picture transfer using a minimal amount of memory.

In one aspect of the present invention, the above and other objects can be accomplished using a multimedia content production method for a portable device. The multimedia content production method which includes retrieving at least one picture file from a storage; producing at least one sound file corresponding to the retrieved picture file; creating a combination file by combining the picture file and the sound file; and integrating at least one combination file into a multimedia file.

The step of retrieving a picture file may include selecting a theme folder.

The theme folder may contain a plurality of images and scenarios associated with an identical theme that are downloaded from at least one content server connected through a wired and/or wireless network.

The multimedia content production method may further include taking pictures using a camera module of the portable device and storing the pictures taken by the camera module into the storage.

The step of taking a picture may include determining whether the taken picture is available for producing a multimedia content with a specific theme and taking one or more pictures until obtaining a picture having a predetermined quality.

The step of producing a sound file may include recording a user's voice with background music.

The step of producing the sound file may include determining whether the currently produced sound file is available and rerecording the sound until obtaining a sound file having a predetermined quality.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram illustrating a portable device equipped with a camera and a voice recorder according to the present invention;
FIGs. 2A to 2B are flowcharts illustrating a multimedia content production method for the portable device according to the present invention;
FIG. 3 shows screen shots illustrating respective processes for producing a multimedia content file according to the present invention; and
FIG. 4 shows screen shots illustrating respective process for producing a multimedia content file according to the present invention.

### DETAILED DESCRIPTION OF THE PREFERRED EMBODIMENT

Preferred embodiments of the present invention will be described with reference to the accompanying drawings in detail. The same reference numbers will be used throughout the drawings to refer to the same or like parts. Detailed descriptions of well-known functions and structures incorporated herein will be omitted when it many obscure the subject matter of the present invention.

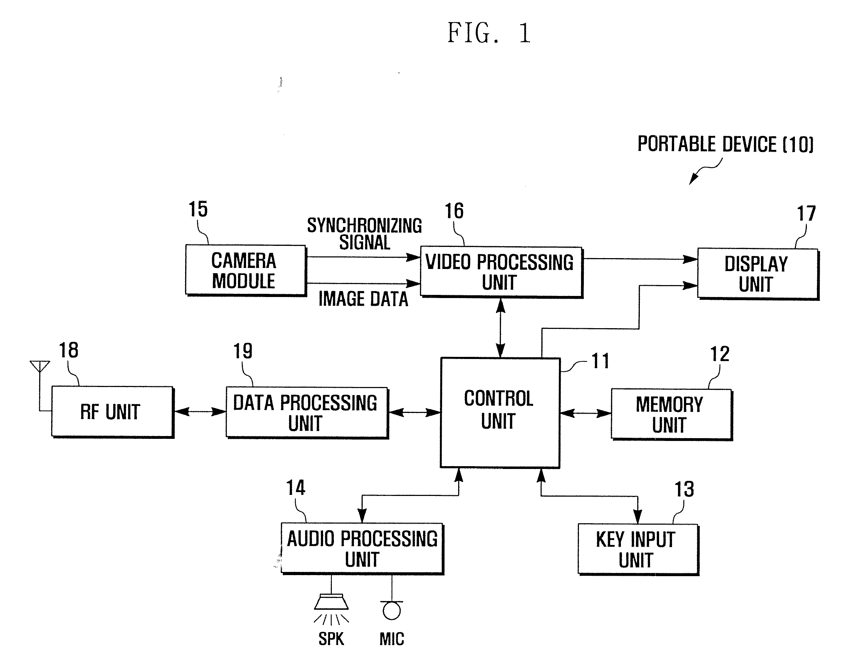

FIG. 1 is a block diagram illustrating a configuration of a portable device equipped with a camera and a voice recorder according to the present invention.

Referring to FIG. 1, the portable device 10 includes a radio frequency (RF) unit 18, a data processing unit 19, an audio processing unit 14, a memory unit 12, a control unit 11, a camera module 15, a video processing unit 16, a display unit 17, and a key input unit 13.

The RF unit 18 performs a communication function for the portable device and includes an RF transmitter (not shown) for up-converting and amplifying a signal to be transmitted and an RF receiver (not shown) for low noise-amplifying and downconverting a received signal.

The data processing unit 19 includes a transmitter for encoding and modulating the signal to be transmitted and a receiver for demodulating and decoding the received signal. That is, the data processing unit 19 is provided with a modem and a coder/decoder (CODEC) pack. The CODEC pack includes a data CODEC (not shown) for processing a data packet and an audio CODEC (not shown) for processing an audio signal, such as a voice signal.

The audio processing unit 14 replays audio signals from the audio CODEC of the data processing unit 19 so as to output these signals through a speaker and transmits the audio signals generated through a microphone to the audio CODEC of the data processing unit 19.

The memory unit 12 may include a program memory and/or a data memory. The program memory may store programs for controlling the general operation of the portable terminal and programs for combining picture and voice files and for integrating the combined files into a single multimedia file. The data memory may temporarily store the data generated while the programs are operating. In this embodiment, the memory unit 12 may include a data base (DB) for matching the picture files, voice files, the combined files that are created by combining associated picture and voice files, and the integrated files that are created by integrating the combined files associated with respective themes, together with their relationships.

The control unit 11 controls the overall operation of the portable device 10. The control unit 11 can integrate the data processing unit 19. The portable device 10 may operate in a picture-taking mode and a voice-recording mode such that the control unit 11 controls to switch between the picture-taking mode and the voice-recording mode and to take a picture, record a voice, and combine the taken picture and the recorded voice.

The camera module 15 may include an image sensor for converting a visual image to an analog signal and a signal processor for converting the analog signal from the image sensor into a corresponding digital signal. The image sensor may include a Charge-Coupled Device (CCD), and the signal processor may include a Digital Signal Processor (DSP). The image sensor and the signal processor may be implemented integrally or separately with other components of the portable device 10 (e.g., the control unit 11, etc).

The video processing unit 16 generates the screen data for displaying the digital signal output from the camera module 15. The video processing unit 16 processes the digital signals by a frame unit and outputs the screen data which corresponds with various characteristics and/or size of the display unit 17. The video processing unit 16 is also provided with a video CODEC to compress the screen data and/or recover the compressed screen data. The video CODEC can include a JPEG (Joint Photographic Experts Group) CODEC, an MPEG (Moving Picture Experts Group) CODEC, a Wavelet CODEC, or the like. The video processing unit 16 is further provided with an On Screen Display function so as to display the on-screen data according to the screen size, under the control of the control unit 11.

The display unit 17 displays the video signal output from the video processing unit 16 and user information output from the control unit 11. The display unit 17 can include a liquid crystal display (LCD). Additionally, the display unit 17 may include a controller such as an LCD controller, a memory for storing the video data.

The key input unit 13 includes a plurality of keys for entering various numbers and/or characters and for configuring various functions. The key input unit 13 may also include means for enabling the user to input a shutter command, a voice recording command, a picture-voice combining command, a combined-files integration command, and the like. The key input unit 13 may also include shortcut keys (e.g., "3", "*", etc.) for instructing a file combination command and for entering into a file editing mode.

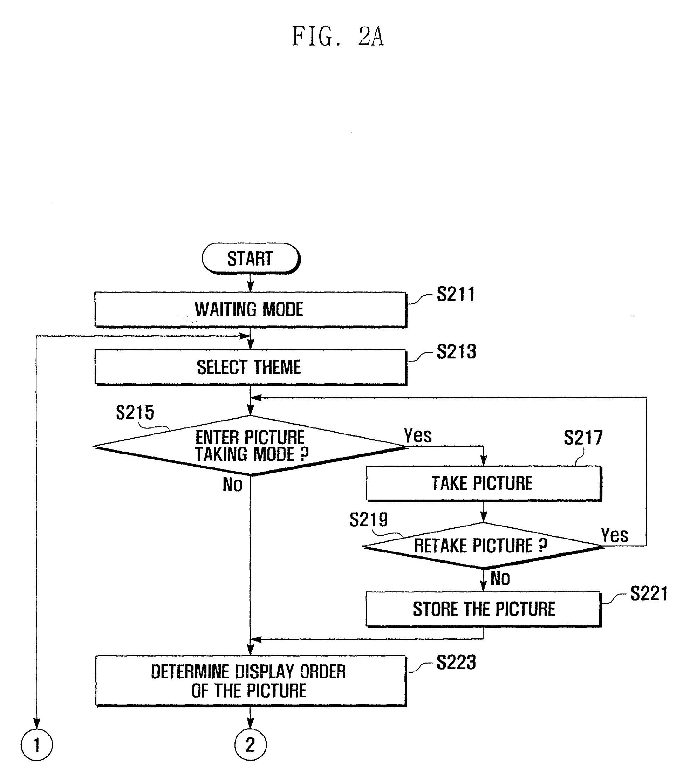

FIGs. 2A to 2B are flowcharts illustrating a multimedia content production method for portable device according to the present invention.

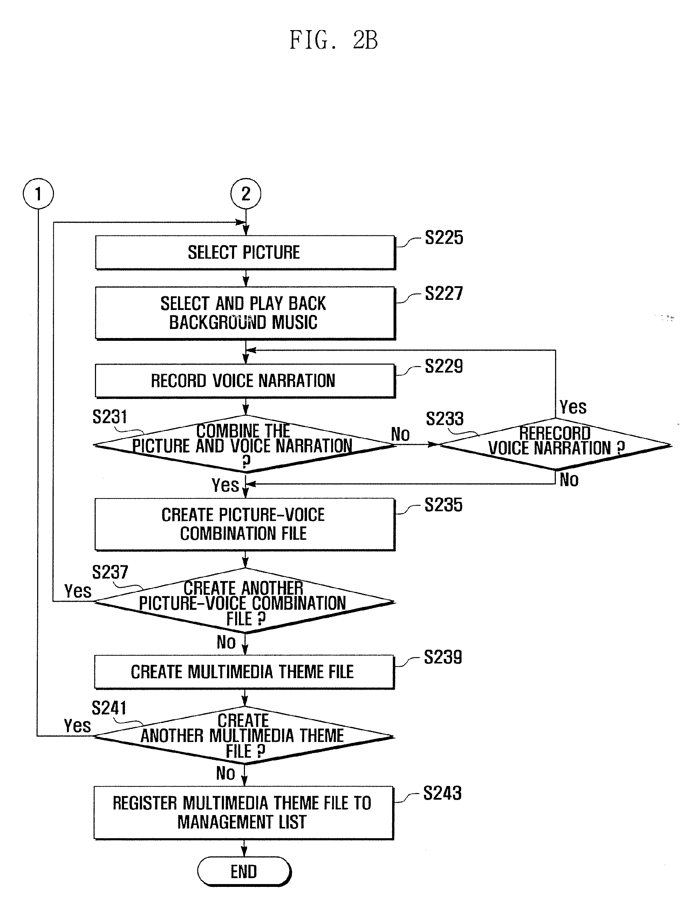

Referring to FIGs. 2A and 2B, while the portable device is in a waiting mode at step 211, the portable device selects a theme of a multimedia file to be produced according to a user's input command at step S213. After the theme is selected, the portable device determines whether to enter a picture-taking mode according to the user's input command at step S215.

If there is an input command for entering the picture-taking mode, the portable device enters the picture-taking mode so as to take a picture according to the user's manipulation at step S217 and thereafter determines whether there is a user command for storing the picture or retaking the picture at step S219. If the user command is for retaking the picture is detected, the portable device repeats step 215 again. On the other hand, if a user command for storing the picture it is detected, the portable device stores the picture at step S221 and determines a display order of the stored pictures stored at step S223.

In the meantime, if a command not to enter the picture-taking mode is detected at step S215, the portable device retrieves previously stored pictures and determines a display order of the stored pictures at step S223.

Once the display order of the pictures is determined, the portable device allows the user to input a selection command through the key input unit 13 so as to select the picture according to the user's selection command at step S225.

Sequentially, the portable device retrieves a music file from the memory unit 12 according to a user's selection command and plays back the selected music file as background music at step S227 and may simultaneously record user's voice inputted through the microphone with background music at step S229.

After the voice recording is completed, the portable device determines whether to combine the recorded voice file with the corresponding picture file according to the user's input command at step S231.

If user command against combining the voice file with the picture file is detected in step 231, the portable device determines whether to rerecord the voice file at step S233. If there is a user's command for recording a voice, the portable device returns to step 229. Thus, a voice recording can be repeated until a satisfactory recording result is obtained.

On the other hand, if there is a user's command for combining the voice file with the picture file is detected at step S231, the portable device combines the recorded voice file with the corresponding picture file so as to generate a picture-voice combination file at step S235.

After generation of the picture-voice combination file, the portable device determines whether to create another picture-voice combination file at step S237. If there is the user's command for combining the voice file with the picture file again, the portable device goes back to perform the step S225 for generating another picture-voice combination file.

On the other hand, in step S237 if it is determined that no other picture-voice combination file is created according to the user's command, the portable device processes the picture-voice combination files generated until then so as to create a multimedia theme file at step S239.

After creating the multimedia theme file, the portable device determines there is a user command for generating another multimedia theme file at step S241. If it is detected that there is the user command for generating another multimedia theme file, the portable device returns to step 211, otherwise, the portable device registers the multimedia theme files generated until then to the management list at step S243.

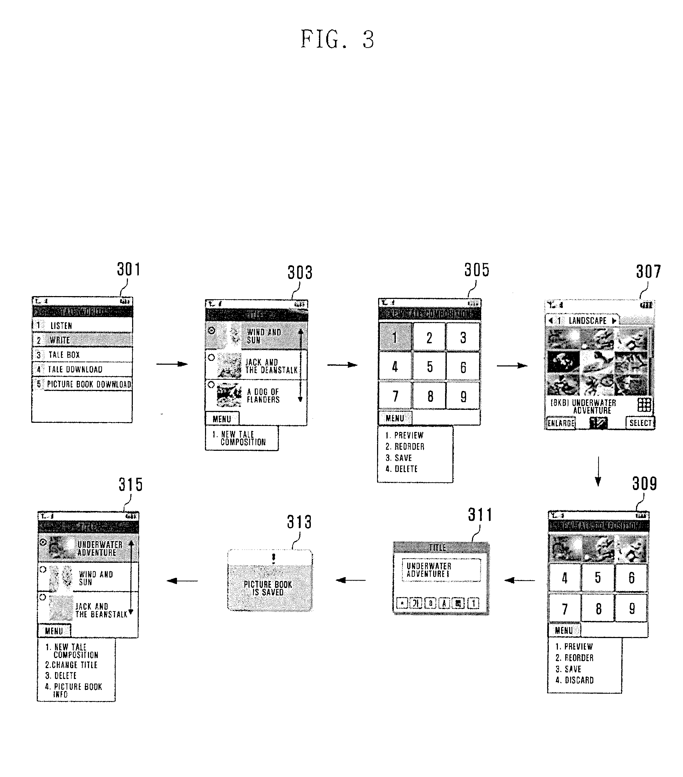

FIG. 3 shows screen shots for illustrating processes for producing a picture book related to a theme. As shown in FIG. 3, once the user select a "tale writing menu" in a tale composition mode at image 301, the portable device displays titles of the previously stored tales as shown at image 303. While the titles are displayed, the user can select a "new tale composition" menu from a pull-down menu.

If the user selects the "new tale composition" menu the portable device may display a frame including of a plurality of square windows for arranging pictures and may activate a first window which is not filled out as shown at image 305. While one of the windows is activated, the user can select one of the items listed on the pull-down menu. In this example, the user may select a "preview" item such that the portable device displays previously stored pictures as shown at image 307. Using the preview menu, the user can select pictures to fill out the windows of the frame as shown at image 309. After all the predetermined number of windows are filled out, the portable terminal may enable the user to entitle the folder containing the selected pictures as shown at image 311 and the folder is stored according to the user command as shown at image 313. Once the folder is stored with the title, the title is registered to the menu list as shown at image 315.

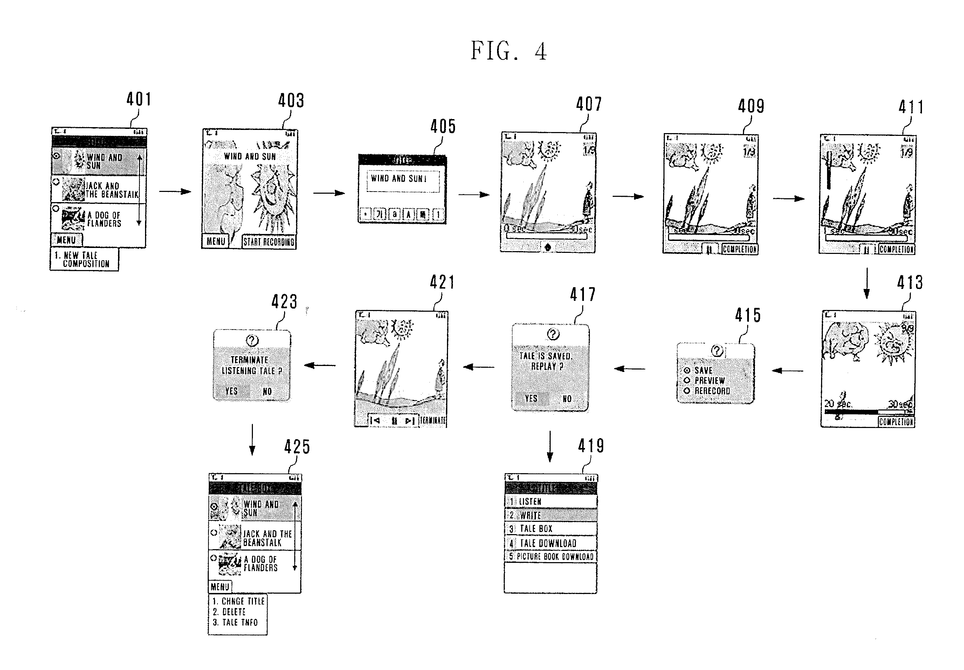

FIG. 4 shows screen shots for illustrating processes for reproducing an orally narrated tale using a previously produced tale according to an embodiment of the present invention.

Referring to FIG. 4, once the user exemplarily selects the "Wind and Sun" selection from the titles of previously stored tales at image 401, the portable device displays pictures contained in the "Wind and Sun" folder in a sequential order as shown at image 403. The portable device enables the user to entitle the orally narrated tale to be produced in text and/or voice as shown at image 405. The portable device displays the page number of the current picture with the total page number of the pictures of the tale on the top of the screen. The time interval for displaying each picture can be adjusted through key manipulation.

While each picture is displayed, the portable device enables the user to provide narration associated to the current picture through the microphone such that the portable device records the user's narration in association with the picture through the images 407 to 411. During the narration of the user, a music file can be selected from the memory unit so as to be played back as the background music. Accordingly, the background music matching to the current picture can be recorded with the user's narration. After checking the recording status as shown at image 413, the portable device combines the sound file with the picture according to the user's command input through the key input unit at step 415. In order to create a plurality of picture-voice combination files, the portable device repeats the processes corresponding to the images 401 to 415.

Whenever a picture-voice combination file is created, the portable device may display menus which enable the user to integrate the picture-voice combination files created until then as a multimedia theme file or to create another picture-voice combination file as shown at image 417. The pictures and the sound contained in the multimedia theme file are outputted through the display unit and the speaker, respectively, according to the user's playback command as shown at image 421. Also, the portable device terminates the playback of the multimedia theme file according to the playback termination command input by the user as shown at image 423 and displays the initial selection menu as shown at image 425.

In the meantime, if there is a user command for creating another picture-voice combination file at image 417, the portable device displays the initial menu screen as shown at image 419 such that the portable device enables the user to enter the process corresponding to image 401.

Although preferred embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

As described above, the multimedia content production method for the present invention allows the user to select a specific theme and combine the picture and sound files associated to the theme such that it is possible to create sound embedded multimedia files, resulting in a unique user experience.

Also, since the multimedia content production method for the present invention creates a multimedia file by combining a plurality of picture and sound files belonged to an identical theme and arranging the files in a sequential order, it is possible to improve the utilization of the portable device equipped with camera and to obtain information transfer efficiency similar to the motion picture with relatively small storage.

## Claims

1. A multimedia content production method for a portable device, the method comprising:
retrieving at least one picture file from a storage area;
producing at least one sound file corresponding to the retrieved at least one picture file;
creating a combination file by combining the retrieved picture file and the corresponding sound file; and
integrating at least one combination file into a multimedia file.

2. The method of claim 1, wherein the step of retrieving at least one picture file further comprises selecting a theme folder.

3. The method for claim 2, wherein the theme folder contains a plurality of images and scenarios associated with an identical theme that are downloaded from at least one content server connected through a network.

4. The method of claim 1, further comprising:
taking pictures using a camera module installed in the portable device; and
storing the pictures taken by the camera module into the storage area.

5. The method of claim 4, wherein the step of taking pictures comprises:
determining whether the taken picture meets a predetermined criteria; and
retaking the picture until a picture meeting the predetermined criteria is obtained.

6. The method of claim 1, wherein the step of producing a sound file comprises recording a user's voice with background music.

7. The method of claim 1, wherein the at least one step of producing the sound file comprises:
determining whether the currently produced sound file is available; and
rerecording the sound file until a satisfactory sound file is obtained.

8. The method of claim 1, wherein the combination file is generated by a user's key manipulation.

9. The method of claim 1, wherein the multimedia file is integrated by a user's key manipulation so as to be played back in a sequential order.

10. The method of claim 8, wherein the multimedia file is integrated by the user's key manipulation so as to be played back in a sequential order.
